# EUROPÄISCHE PATENTSCHRIFT

(11) **EP 3 561 465 B1**
(45) Veröffentlichungstag und Bekanntmachung des Hinweises auf die Patenterteilung: **23.12.2020**
(21) Anmeldenummer: 18169669.1
(22) Anmeldetag: 26.04.2018
(51) Int. Cl.: G01J 1/42, G01J 1/58, G01J 1/16, G01J 1/04

(54) **VERFAHREN UND VORRICHTUNG ZUR DETEKTION VON LEUCHTZUSTÄNDEN VON STRAHLUNGSQUELLEN**
METHOD AND DEVICE FOR DETECTING LIGHT CONDITIONS OF RADIATION SOURCES
PROCÉDÉ ET DISPOSITIF DE DÉTECTION DES ÉTATS LUMINEUX DE SOURCES DE RAYONNEMENT

(43) Veröffentlichungstag der Anmeldung: 30.10.2019
(73) Patentinhaber: SICK AG, 79183 Waldkirch (DE)
(72) Erfinder: Hirt, Günter, 77790 Steinach (DE); Reichenbach, Hans-Peter, 79286 Glottertal (DE)
(74) Vertreter: Manitz Finsterwald Patent- und Rechtsanwaltspartnerschaft mbB

(56) Entgegenhaltungen:
- US-A- 5 037 198
- US-A1- 2011 089 842
- US-A1- 2013 155 392
- US-B1- 7 288 755
- RONG C ET AL: "Flickermeter used for different types of lamps", 9TH INTERNATIONAL CONFERENCE ON ELECTRICAL POWER QUALITY AND UTILISATION, 2007, 9. Oktober 2007 (2007-10-09), Seiten 1-6, XP031226065, ISBN: 978-84-690-9441-9

## Beschreibung

Die vorliegende Erfindung betrifft ein Verfahren zur Detektion von Leuchtzuständen von Strahlungsquellen.

Aus US 2013/0155392 A1 ist ein System zur Inbetriebnahme eines Beleuchtungssystems bekannt, welches mehrere an einer Vielzahl von Stellen (z.B. in verschiedenen Räumen) installierte Lichtquellen und Sensoren umfasst. Um die Sensoren den Lichtquellen möglichst automatisch zuzuordnen (d.h. um festzustellen, welcher Sensor das Licht welcher in der Nähe installierter Lichtquellen erfassen kann), werden die Lichtquellen nacheinander auf speziell modulierte Weise (z.B. pulsweitenmoduliert) angesteuert. Durch Filterung der von den Sensoren erfassten Signale mittels eines der jeweiligen Modulation entsprechenden Filters wird dann festgestellt, welcher Sensor wann derartig moduliertes Licht erfasst hat. Aus US 2011/0089842 A1 ist ein interaktives Beleuchtungssystem bekannt, bei dem mittels verstellbarer digitaler Filter unterschiedliche Trägerfrequenzen der pulsweitenmodulierten Helligkeitssteuerung von LEDs aus von diesen LEDs ausgesandter Strahlung gefiltert werden können. US 7,288,755 B1 beschreibt ein Detektionssystem zur Unterscheidung zwischen künstlichem Licht und Sonnenlicht.

Insbesondere im industriellen Umfeld kann es zweckmäßig sein, Leuchtzustände einzelner oder mehrerer verschiedener Strahlungsquellen, vorzugsweise automatisiert, zu detektieren. Denn eine Vielzahl von Erzeugnissen und Produkten weisen Strahlungsquellen auf, deren Funktionsfähigkeit im Anschluss an die Herstellung des jeweiligen Erzeugnisses oder Produktes gewährleistet sein soll. Bei den Strahlungsquellen handelt es sich insbesondere um Lichtquellen, also Strahlungsquellen, die zum Aussenden elektromagnetischer Strahlung im Bereich sichtbaren Lichts oder auch darüber hinaus bis zu infraroter und/oder ultravioletter Strahlung ausgebildet sind. Derartige Strahlungsquellen können an einem jeweiligen Erzeugnis beispielsweise als Status- oder Kontrolllämpchen oder auch als hinterleuchtete Displays oder Symbole, etwa an dem Armaturenbrett eines Fahrzeugs ausgebildet sein. Grundsätzlich können als Strahlungsquellen auch, etwa in der Gas- und Ölindustrie, Flammen zu erkennen oder, beispielsweise in der Gasthermenproduktion, Zündflammen zu überwachen sein.

Beschränkt sich die Funktion einer jeweiligen Strahlungsquelle darauf, entweder aktiv zu leuchten, also eine gewisse Strahlung zu erzeugen und auszusenden, oder inaktiv (ausgeschaltet) zu sein, dann brauchen bei der Detektion nur zwei Leuchtzustände unterschieden zu werden, nämlich ein aktiver Leuchtzustand, in dem die Strahlung ausgesandt wird, und ein inaktiver Leuchtzustand, in dem die Strahlung nicht ausgesandt wird. Grundsätzlich kann die jeweilige Strahlungsquelle aber auch mehrere verschiedene aktive Leuchtzustände aufweisen, in denen sie Strahlung aussendet, wobei sich die verschiedenen aktiven Leuchtzustände dann beispielsweise hinsichtlich des optischen Spektrums, d.h. der Farbe oder Farbzusammensetzung, der (mittleren) Intensität, der Dauer oder der Art einer Pulsfolge der ausgesandten Strahlung unterscheiden können.

Um die Funktionsfähigkeit einer jeweiligen Strahlungsquelle zu prüfen, kann eine Detektionsvorrichtung, z.B. eine opto-elektronische Sensoreinheit, auf die im Grundzustand inaktive Strahlungsquelle ausgerichtet werden und die Strahlungsquelle dann dazu angesteuert werden, einen aktiven Leuchtzustand einzunehmen. Mittels der Detektionsvorrichtung kann die ausgesandte Strahlung dann erfasst und mit dem zu erwartenden Verhalten der Strahlungsquelle verglichen werden.

Bei der Detektionsvorrichtung kann es sich beispielsweise um ein Kamerasystem handeln, das ein Bild von der Strahlungsquelle aufzeichnet und anhand des Bildes die Helligkeit der Strahlungsquelle erfasst, um daraus den jeweiligen Leuchtzustand der Strahlungsquelle abzuleiten. Um lediglich einen oder mehrere aktive Leuchtzustände von einem inaktiven Leuchtzustand und gegebenenfalls untereinander unterscheiden zu können, ist das Verwenden eines Kamerasystems jedoch unnötig komplex, da die räumliche Erfassung der Strahlungsquelle in ihrer Umgebung durch die Kamera dafür nicht erforderlich ist und die Auswertung innerhalb der Bilddaten vergleichsweise aufwendig ist. Alternativ zu einem Kamerasystem kann die Detektion der Leuchtzustände auch durch einen Menschen mit dem Auge erfolgen. Im Vergleich dazu ist jedoch eine maschinelle Detektion insofern vorteilhaft, als sie kostengünstiger und besser in automatisierte Abläufe integrierbar ist.

Als Detektionsvorrichtungen können ferner energetische Taster verwendet werden, die z.B. eine Photodiode umfassen und auftreffende Strahlung in elektrische Signale umwandeln können. Beispielsweise sind Kontrastsensoren bekannt, die Helligkeitsunterschiede auf einer Oberfläche detektieren können. Dazu wird ein jeweiliger Punkt der Oberfläche von einer internen Strahlungsquelle des Kontrastsensors beleuchtet und die Intensität der von der Oberfläche an dem jeweiligen Punkt reflektierten Strahlung erfasst. Um sicherzustellen, dass es sich bei der erfassten Strahlung um von der internen Strahlungsquelle des Kontrastsensors ausgesandte und von der Oberfläche reflektierte Strahlung handelt, kann die Strahlung in definierter Weise intensitätsmoduliert sein. Denn dann können z.B. durch ein zeitkorreliertes Filter die störenden Einflüsse sonstiger Strahlung reduziert werden, so dass idealerweise nur die reflektierte Strahlung der internen Strahlungsquelle übrig bleibt.

Wenn dagegen kein passives Objekt, sondern aktive Leuchtzustände einer Strahlungsquelle detektiert werden sollen, ist eine Beleuchtung mit von der Detektionsvorrichtung ausgesandter Strahlung nicht sinnvoll, da keine von einem Objekt reflektierte Strahlung, sondern die von der Strahlungsquelle selbst ausgesandte Strahlung erfasst werden soll. Zwar kann dazu grundsätzlich ein Kontrastsensor der beschriebenen Art als Detektionsvorrichtung eingesetzt werden, wenn dessen interne Strahlungsquelle während des Erfassens der Strahlung der zu überprüfenden Strahlungsquelle ausgeschaltet bleibt. Dabei ergibt sich dann jedoch wiederum die Problematik, dass die von der Strahlungsquelle ausgesandte und für die Detektion des jeweiligen aktiven Leuchtzustands der Strahlungsquelle zu erfassende Strahlung von Hintergrundstrahlung, also sonstiger Strahlung wie z.B. der allgemeine Beleuchtung einer Werkshalle oder auch von Sonnenlicht, überlagert werden kann. Je nach Intensität der Hintergrundstrahlung kann das zur Folge haben, dass sich unter Umständen nicht einmal mehr ein aktiver Leuchtzustand von dem inaktiven Leuchtzustand unterscheiden lässt oder dass Änderungen der Hintergrundstrahlung irrtümlich für Änderungen des Leuchtzustands der Strahlungsquelle gehalten werden. Es ist daher vorteilhaft, wenn die von der Strahlungsquelle in einem aktiven Leuchtzustand ausgesandte Strahlung von der Hintergrundstrahlung möglichst spezifisch unterschieden werden kann.

Eine einfache Möglichkeit der Unterscheidung besteht darin, die Intensität der insgesamt erfassten Strahlung als Kriterium für den aktiven Leuchtzustand heranzuziehen, wenn davon ausgegangen werden kann, dass die Hintergrundstrahlung die Intensität der in aktivem Leuchtzustand von der Strahlungsquelle ausgesandten Strahlung in der Regel nicht erreicht. Andere Möglichkeiten bestehen darin, die Farbe oder eine Polarisation der von der Strahlungsquelle ausgesandten Strahlung für die Unterscheidung von der Hintergrundstrahlung zu berücksichtigen. Je mehr solcher Kriterien berücksichtigt werden, desto zuverlässiger kann die Detektion erfolgen. Allerdings setzt eine solche Unterscheidung voraus, dass die Strahlungsquelle Strahlung einer besonderen Farbe oder Polarisation aussendet. Zudem muss die Detektionsvorrichtung speziell dazu ausgebildet oder konfiguriert sein, die Farbe oder Polarisation der ausgesandten Strahlung auch erfassen zu können. Dazu können zwar grundsätzlich optische Filter verwendet werden. Durch diese wird die Detektionsvorrichtung jedoch auf eine bestimmte Farbe oder Polarisation festgelegt. Bei einem Wechsel der zu überprüfenden Strahlungsquelle, durch den sich die Farbe oder Polarisation der zu erfassenden Strahlung ändert, muss das Filter daher ausgetauscht werden. Zudem ist eine Anpassung der optischen Filterung an eine jeweilige Strahlungsquelle nur möglich, wenn auch ein entsprechendes optisches Filter zur Verfügung steht. Somit sind die Anpassungsmöglichkeiten in der Praxis begrenzt, da keine individuelle Anpassung an die jeweilige Strahlungsquelle erfolgen kann.

Vor diesem Hintergrund ist es eine Aufgabe der Erfindung, ein Verfahren bzw. eine opto-elektronische Sensoreinheit zur Detektion von Leuchtzuständen von Strahlungsquellen bereitzustellen, welche/s in einfacher Weise im Hinblick auf eine zuverlässige Unterscheidung zwischen der von einer jeweiligen Strahlungsquelle ausgesandten Strahlung und störender Hintergrundstrahlung flexibel selektiv anpassbar ist.

Die Aufgabe wird gelöst durch ein Verfahren mit den Merkmalen des Anspruchs 1 sowie durch eine opto-elektronische Sensoreinheit mit den Merkmalen des Anspruchs 11. Vorteilhafte Ausführungsformen ergeben sich aus den Unteransprüchen, der vorliegenden Beschreibung sowie den Figuren.

Das Verfahren umfasst einerseits Einlernschritte, die für einen jeweiligen aktiven Leuchtzustand einer jeweiligen Strahlungsquelle zumindest einmal durchzuführen sind, sowie Messschritte, die dann für die konkrete Detektion des jeweiligen Leuchtzustands der jeweiligen Detektion durchzuführen sind und beispielsweise für eine kontinuierliche Detektion fortlaufend oder zumindest wiederholt durchgeführt werden können. Eine Wiederholung der Einlernschritte ist dagegen grundsätzlich nicht erforderlich, jedenfalls solange kein Wechsel des zu detektierenden Leuchtzustands oder der Strahlungsquelle erfolgt. Findet ein solcher Wechsel statt, kann es dagegen erforderlich oder sinnvoll sein, die Einlernschritte erneut durchzuführen, um das Verfahren wieder optimal anzupassen. Ferner kann es, wenn die Messung einer Drift oder ähnlichen zeitlichen Störeinflüssen unterliegt, zweckmäßig sein, die Einlernschritte jeweils nach Ablauf einer gewissen Zeit oder jeweils zu Beginn einer Serie von Messungen erneut durchzuführen.

Die Einlernschritte dienen dazu, ein an die von der jeweiligen Strahlungsquelle in dem jeweiligen aktiven Leuchtzustand ausgesandte Strahlung individuell angepasstes Band-Pass-Filter zu ermitteln. Dabei wird davon ausgegangen, dass die Strahlung ein charakteristisches Spektrum aufweisen kann, welches sie von der Hintergrundstrahlung unterscheidet. Zwar kann die Hintergrundstrahlung auch Anteile innerhalb des charakteristischen Spektrums der zu messenden Strahlung aufweisen. Zumindest aber die übrigen Anteile der Hintergrundstrahlung können mittels des Band-Pass-Filters aus der insgesamt erfassten Strahlung ausfilterbar sein. Auf diese Weise kann die relevante Information gegenüber dem Hintergrund zumindest verstärkt werden. Dabei kann die Band-Pass-Filterung zusätzlich zu weiteren Kriterien für die Unterscheidung der zu messenden Strahlung von der Hintergrundstrahlung eingesetzt werden, wie beispielsweise der Farbe oder der Polarisation der Strahlung.

In diesem Zusammenhang ist zu beachten, dass das genannte charakteristische Spektrum der von der jeweiligen Strahlungsquelle in dem jeweiligen aktiven Leuchtzustand ausgesandten Strahlung, an welches das Band-Pass-Filter angepasst wird, nicht als Farbe der Strahlung zu verstehen ist, es also von dem optischen Spektrum der Strahlung zu unterscheiden ist. Insbesondere können für das Verfahren Strahlungssensoren genutzt werden, die gar nicht dazu ausgebildet sind, verschiedene Farben der Strahlung zu unterscheiden. Vielmehr ist das genannte charakteristische Spektrum auf Intensitätsschwankungen, also den zeitlichen Verlauf der Strahlungsintensität, bei wesentlich niedrigeren Frequenzen als den die Farbe der Strahlung definierenden Frequenzen des optischen Spektrums bezogen. Beispielsweise können mittels eines jeweiligen Strahlungssensors Frequenzen bis in den Kilohertzbereich, gegebenenfalls bis in den Megahertzbereich aufgelöst werden, wohingegen das die Farbe der Strahlung definierende optische Spektrum Frequenzen im Terahertzbereich umfasst.

Ein charakteristisches Spektrum der Strahlung einer jeweiligen Strahlungsquelle kann beispielsweise darauf basieren, dass die Strahlungsquelle gepulst, insbesondere pulsweitenmoduliert, betrieben wird, etwa um die Strahlungsquelle auf eine gewünschte Helligkeit zu dimmen. Intensitätsschwankungen oder -modulationen können sich auch aus der Art der jeweiligen Strahlungserzeugung in der Strahlungsquelle ergeben, bei einer an dem allgemeinen Stromnetz betriebenen Glühlampe beispielsweise als Folge der 50Hz-Frequenz der Netzspannung.

Da es vielfältige Gründe dafür geben kann, dass die von einer jeweiligen Strahlungsquelle ausgesandte Strahlung Intensitätsmodulationen aufweist, können diese je nach Strahlungsumfeld für die jeweilige Strahlungsquelle charakteristisch sein. Insbesondere besteht eine gewisse Wahrscheinlichkeit dafür, dass sich die Strahlung der jeweiligen Strahlungsquelle hinsichtlich solcher Intensitätsmodulationen von der Hintergrundstrahlung oder zumindest einem Teil der Hintergrundstrahlung unterscheidet. Zumindest in diesen Fällen kann durch das speziell an das charakteristische Spektrum der zu messenden Strahlung angepasste Band-Pass-Filter eine Verstärkung der zu messenden Strahlung relativ zu der Hintergrundstrahlung erreicht werden, welche die jeweilige Messung weniger anfällig für Störungen durch die Hintergrundstrahlung macht.

Konkret umfassen die Einlernschritte zunächst, dass mittels eines Strahlungssensors bei in den aktiven Leuchtzustand versetzter Strahlungsquelle ein erster zeitlicher Referenzverlauf der Intensität von auf den Strahlungssensor treffender Strahlung erfasst wird und dass mittels des Strahlungssensors bei in einen inaktiven Leuchtzustand versetzter Strahlungsquelle ein zweiter zeitlicher Referenzverlauf der Intensität von auf den Strahlungssensor treffender Strahlung erfasst wird. Diese zeitlichen Verläufe der Intensität sind dabei vorzugsweise einfach Abfolgen von in regelmäßigen zeitlichen Abständen, also bei einer definierten Abtastfrequenz, erfassten Intensitäten der auf den Strahlungssensor treffenden Strahlung. Da bei aktivem Leuchtzustand sowohl von der Strahlungsquelle ausgesandte Strahlung als auch Hintergrundstrahlung auf den (zweckmäßigerweise relativ zur Strahlungsquelle geeignet angeordneten und ausgerichteten) Strahlungssensor trifft, gibt der erste Referenzverlauf den zeitlichen Verlauf der kumulierten Intensität dieser beiden Strahlungen wieder. In den zweiten Referenzverlauf geht dagegen nur die Hintergrundstrahlung ein, da die Strahlungsquelle im inaktiven Leuchtzustand keine Strahlung aussendet.

Der Strahlungssensor kann zum Erfassen der Intensität eintreffender Strahlung insbesondere eine Photodiode, beispielsweise auf Basis von Silizium oder Germanium, umfassen. Ferner weist der Strahlungssensor beispielsweise eine Abtastfrequenz im Bereich von einigen Hertz bis zu Kilohertz oder Megahertz, z.B. von 1Hz oder 10 Hz bis zu 200 kHz oder 1 MHz, vorzugsweise im Kilohertzbereich, auf. Dabei muss die Abtastfrequenz nicht fest vorgegeben sein, sondern kann innerhalb des Bereichs oder eines Teilbereichs davon, vorzugsweise im Wesentlichen frei, einstellbar sein.

Die Länge des ersten und des zweiten Referenzverlaufs, die der Dauer entspricht, während welcher der jeweilige Referenzverlauf erfasst wird, kann dabei vorgegeben oder variabel sein und sich für die beiden Referenzverläufe auch unterscheiden. Denn der jeweilige Referenzverlauf braucht jeweils lediglich hinreichend lang zu sein, um eine Frequenzanalyse zu ermöglichen. Dazu kann es ausreichen, die Intensität jeweils zumindest so lange zu erfassen, dass der jeweilige Referenzverlauf einige wenige, z.B. mindestens fünf, Perioden der niedrigsten zu berücksichtigenden Frequenz der Intensitätsmodulationen, z.B. 25Hz, umfasst. Für die beispielhaft genannten Werte kann die Mindestdauer eines Referenzverlaufs also beispielsweise 0,2 Sekunden betragen. Vorzugsweise beträgt die Dauer zumindest 1 Sekunde.

Des Weiteren umfassen die Einlernschritte, dass durch Transformieren des ersten Referenzverlaufs in die Frequenzdomäne ein erstes Referenzspektrum ermittelt wird und dass durch Transformieren des zweiten Referenzverlaufs in die Frequenzdomäne ein zweites Referenzspektrum ermittelt wird. Das Transformieren kann jeweils durch eine, insbesondere diskrete, Fourier-Transformation erfolgen. Die so ermittelten Referenzspektren geben an, mit welchem Anteil verschiedene Frequenzen in dem jeweils zugrundeliegenden Referenzverlauf enthalten sind.

Die Referenzspektren können dabei auf einen bestimmten Frequenzbereich zu berücksichtigender Intensitätsmodulationen beschränkt sein. Eine Beschränkung nach oben kann sich gemäß dem Nyquist-Shannon-Abtasttheorem dadurch ergeben, dass keine Frequenzen zuverlässig erfasst werden können, die größer als die halbe Abtastfrequenz sind. Beispielsweise kann für eine Abtastfrequenz von 100 kHz die maximale Frequenz der Referenzspektren bei 50 kHz liegen. Die obere Grenzfrequenz kann aber auch niedriger gewählt werden. Eine untere Grenzfrequenz der Referenzspektren kann beispielsweise bei der Sichtbarkeitsgrenze des menschlichen Auges von etwa 25 Hz festgelegt werden. Auf diese Weise gehen nur Intensitätsmodulationen in die Identifikation der von der jeweiligen Strahlungsquelle stammenden Strahlung ein, die für das menschliche Auge nicht sichtbar sind. Geringerfrequente Modulationen, die mit dem Auge wahrgenommen werden können, werden dagegen als Ein- bzw. Ausschalten der Strahlungsquelle gewertet. Grundsätzlich kann die untere Grenzfrequenz aber auch bei einer niedrigeren oder höheren Frequenz festgelegt werden.

Ferner umfassen die Einlernschritte, dass ein Differenzspektrum als Differenz des ersten Referenzspektrums und des zweiten Referenzspektrums ermittelt wird. Die Differenzbildung kann durch einfache Subtraktion des einen Referenzspektrums von dem anderen erfolgen. Insbesondere kann das zweite Referenzspektrum, welches lediglich auf der Hintergrundstrahlung beruht, von dem ersten Referenzspektrum, das zusätzlich auf der Strahlung der jeweiligen Strahlungsquelle beruht, abgezogen werden. Dabei können zudem Skalierungen oder Normierungen erfolgen. Durch die Differenzbildung heben sich die Anteile der Hintergrundstrahlung an dem ersten und an dem zweiten Referenzspektrum zumindest im Wesentlichen auf, so dass dem Differenzspektrum zumindest im Wesentlichen ausschließlich die von der jeweiligen Strahlungsquelle ausgesandte Strahlung zugrundliegt. Das Differenzspektrum entspricht somit vorteilhafterweise dem Frequenzspektrum dieser Strahlung, jedenfalls in dem von dem Differenzspektrum abgedeckten Frequenzbereich.

Die Einlernschritte umfassen des Weiteren, dass basierend auf dem Differenzspektrum ein Band-Pass-Filter ermittelt (festgelegt) wird. Mit anderen Worten orientiert sich das Ermitteln des Band-Pass-Filters an dem Differenzspektrum, also idealerweise direkt an den Frequenzen der tatsächlich von der jeweiligen Strahlungsquelle ausgesandten Strahlung. Auf diese Weise wird das Band-Pass-Filter spezifisch an die jeweilige Strahlungsquelle, deren Leuchtzustände detektiert werden sollen, angepasst. Die Orientierung an dem Differenzspektrum kann beispielsweise derart erfolgen, dass ein Durchlassbereich des Band-Pass-Filters so eingestellt wird, dass er hinsichtlich seiner Minimalfrequenz, seiner Maximalfrequenz und/oder seiner Breite an das Differenzspektrum, insbesondere an einen signifikanten Bereich, wie etwa einen Berg oder Peak, des Differenzspektrums, angepasst ist.

Insofern ist eine Ausführungsform vorteilhaft, bei der das Ermitteln des Band-Pass-Filters umfasst, dass ein Band-Pass-Filter mit einem Durchlassbereich ermittelt wird, dessen Minimalfrequenz, dessen Maximalfrequenz und/oder dessen Breite aus dem Differenzspektrum abgeleitet wird/werden. Dabei werden vorzugsweise zumindest zwei dieser Parameter aus dem Differenzspektrum abgeleitet. Die Minimalfrequenz und/oder die Maximalfrequenz können aus dem Differenzspektrum beispielsweise dadurch abgeleitet werden, dass Positionen bestimmt werden, an denen das Differenzspektrum einen bestimmten Schwellenwert über- bzw. wieder unterschreitet.

Für das Ermitteln des Band-Pass-Filters kann ein Band-Pass-Filter anhand der genannten aus dem Differenzspektrum abgeleiteten Parameter oder auf andere Weise auf dem Differenzspektrum basierend neu entworfen werden. Alternativ zu einem für eine jeweilige Strahlungsquelle individuell ermittelten Band-Pass-Filter kann das Ermitteln des Band-Pass-Filters auch dadurch erfolgen, dass aus einem Satz vordefinierter Band-Pass-Filter, insbesondere aus einer sogenannten Filterbank, jeweils das an das Differenzspektrum am besten angepasste Band-Pass-Filter ausgewählt wird. Als am besten angepasst kann dabei beispielsweise dasjenige Band-Pass-Filter anzusehen sein, dessen Durchlassbereich die größte Übereinstimmung mit dem Differenzspektrum, insbesondere mit einem signifikanten Bereich, etwa einem Berg oder Peak, des Differenzspektrums, aufweist.

Gemäß einer weiteren Ausführungsform kann das Ermitteln des Band-Pass-Filters auch umfassen, dass das Differenzspektrum in die Zeitdomäne transformiert wird, was mittels einer inversen, insbesondere disktreten, Fourier-Transformation erfolgen kann. Das transformierte Differenzspektrum entspricht dann vorteilhafterweise einem zeitlichen Intensitätsverlauf erfasster Strahlung, der von Frequenzanteilen, die denjenigen der Hintergrundstrahlung entsprechen, befreit wurde und somit im Wesentlichen nur der von der jeweiligen Strahlungsquelle ausgesandten Strahlung entsprechende Frequenzanteile umfasst. Somit kann das transformierte Differenzspektrum als Impulsantwort des zu ermittelnden Band-Pass-Filters angesehen werden, welches an das charakteristische Spektrum der von der jeweiligen Strahlungsquelle in dem jeweiligen aktivem Leuchtzustand ausgesandten Strahlung insofern angepasst ist, als es gerade die Frequenzen dieses charakteristischen Spektrums passieren lässt. Folglich umfasst das Ermitteln des Band-Pass-Filters bei dieser Ausführungsform vorteilhafterweise ferner, dass ein Band-Pass-Filter zu einer Impulsantwort ermittelt wird, die dem transformierten Differenzspektrum entspricht. Aufgrund der Definition des Band-Pass-Filters anhand seiner Impulsantwort, handelt es sich bei dem Band-Pass-Filter insbesondere um ein Band-Pass-Filter des FIR-Typs (Finite-Impulse-Response).

Da sich das charakteristische Spektrum der von der jeweiligen Strahlungsquelle ausgesandten Strahlung nicht zwangsläufig kontinuierlich über einen gewissen Frequenzbereich erstreckt, sondern voneinander zumindest im Wesentlichen disjunkte Teile aufweisen kann, kann es sich bei dem Band-Pass-Filter auch um ein Multi-Band-Pass-Filter handeln. Sofern die Referenzspektren nicht wie vorstehend beschrieben auf eine obere und/oder eine untere Grenzfrequenz beschränkt worden sind und auch das Differenzspektrum nicht in dieser Weise beschränkt wurde, kann vorgesehen sein, dass zumindest das Band-Pass-Filter in entsprechender Weise eingeschränkt wird, so dass es Frequenzen unterhalb einer unteren Grenzfrequenz und Frequenzen oberhalb einer oberen Grenzfrequenz stets ausfiltert. Insbesondere die untere Grenzfrequenz kann für eine Anpassung an eine gewünschte Schaltfrequenz, mit der das Vorliegen oder Nicht-Vorliegen des aktiven Leuchtzustands ermittelt wird, auch vorgebbar sein.

Die Einlernschritte dienen jedoch nicht lediglich dazu, ein geeignet an den jeweiligen aktiven Leuchtzustand der jeweiligen Strahlungsquelle angepasstes Band-Pass-Filter zu ermitteln, sondern auch dazu, ein Kriterium dafür festzulegen, wann erfasste Strahlung als Zeichen für den aktiven Leuchtzustand und wann als Zeichen für den inaktiven Leuchtzustand gewertet wird. Dazu umfassen die Einlernschritte, dass eine erste Referenzintensität als Mittelwert des ersten Referenzverlaufs ermittelt wird und dass eine zweite Referenzintensität als Mittelwert des zweiten Referenzverlaufs ermittelt wird. Der Mittelwert kann beispielsweise das arithmetische Mittel der einzelnen Werte des ersten bzw. des zweiten Referenzverlaufs sein. Grundsätzlich kommen aber auch andere Mittelwerte in Betracht. Die erste und die zweite Referenzintensität geben somit eine zeitlich gemittelte Intensität der auf den Strahlungssensor jeweils auftreffenden Strahlung an, wobei die auftreffende Strahlung für die erste Referenzintensität sowohl von der jeweiligen Strahlungsquelle ausgesandte Strahlung als auch Hintergrundstrahlung umfasst und für die zweite Referenzintensität ausschließlich Hintergrundstrahlung umfasst. Somit ist zu erwarten, dass die erste Referenzintensität größer ist als die zweite Referenzintensität.

Durch Vergleich einer als Ergebnis einer Messung ermittelten Intensität der erfassten Strahlung mit den Referenzintensitäten kann somit festgestellt werden, ob die bei der Messung erfasste Strahlung hinsichtlich ihrer Intensität eher für das Vorliegen des aktiven Leuchtzustands oder eher für das Vorliegen des inaktiven Leuchtzustands der jeweiligen Strahlungsquelle spricht. Insofern umfassen die Einlernschritte ferner, dass basierend auf der ersten Referenzintensität und der zweiten Referenzintensität eine Schaltschwelle festgelegt wird. Die Schaltschwelle kann beispielsweise ein Intensitätswert sein, der zwischen der ersten Referenzintensität und der zweiten Referenzintensität liegt. Liegt dann eine gemessene Intensität oberhalb dieses Intensitätswerts, wird vom Vorliegen des aktiven Leuchtzustands ausgegangen und beispielsweise ein positives Schaltsignal ausgegeben. Liegt die gemessene Intensität dagegen unterhalb dieses Intensitätswerts, wird vom Vorliegen des inaktiven Leuchtzustands ausgegangen und beispielsweise kein oder ein negatives Schaltsignal ausgegeben. Der genannte Intensitätswert kann insbesondere das arithmetische Mittel der beiden Referenzintensitäten sein. Für ein strengeres oder weniger strenges Kriterium kann der Intensitätswert auch näher an der ersten Referenzintensität bzw. der zweiten Referenzintensität festgelegt werden.

Mit dem in den Einlernschritten ermittelten Band-Pass-Filter sowie der festgelegten Schaltschwelle können dann für die Detektion des jeweiligen aktiven Leuchtzustands der jeweiligen Strahlungsquelle die Messschritte durchgeführt werden. Dabei umfassen die Messschritte, dass mittels des Strahlungssensors ein zeitlicher Messverlauf der Intensität von auf den Strahlungssensor treffender Strahlung erfasst wird. Das Erfassen des Messverlaufs kann grundsätzlich in entsprechender Weise wie das Erfassen der Referenzverläufe erfolgen, muss jedoch nicht zwingend auf eine bestimmte Dauer beschränkt sein. Vielmehr kann für eine kontinuierliche Überwachung der Lichtquelle über einen längeren, gegebenenfalls vorab unbestimmten Zeitraum auch das Erfassen des Messverlaufs kontinuierlich über diesen Zeitraum erfolgen.

Die Messschritte umfassen ferner, dass der erfasste Messverlauf mittels des in den Einlernschritten ermittelten Band-Pass-Filters gefiltert wird. Wird der Messverlauf kontinuierlich über einen längeren Zeitraum erfasst, kann diese Filterung auch lediglich über einen jeweiligen Abschnitt des Messverlaufs erfolgen, insbesondere nacheinander für mehrere aufeinanderfolgende, gegebenenfalls teilweise überlappende, Abschnitte des Messverlaufs, so dass während einer längeren Messung eine fortlaufende Auswertung, vorzugsweise mit einer bestimmten vorgegebenen oder zumindest begrenzt vorgebbaren Schaltfrequenz, erfolgen kann. Durch die Filterung des Messverlaufs (bzw. eines jeweiligen Abschnitts des Messverlaufs) mittels des Band-Pass-Filters werden die Anteile der Hintergrundstrahlung an dem Messverlauf frequenzbasiert reduziert. Insofern werden die Anteile der von der jeweiligen Strahlungsquelle ausgesandten Strahlung an dem Messverlauf frequenzbasiert freigestellt und können dann für die weitere Auswertung herangezogen werden, wodurch die Zuverlässigkeit der Auswertung, je nachdem wie spezifisch die Filterung ist, wesentlich verbessert werden kann. Das Auswerten des gefilterten Messverlaufs erfolgt dabei als weiterer Messschritt anhand der in den Einlernschritten festgelegten Schaltschwelle, beispielsweise durch einfachen Vergleich eines jeweiligen Mittelwerts der Intensität des Messverlaufs mit der Schaltschwelle.

Die Verbesserung der Zuverlässigkeit der Auswertung infolge der Band-Pass-Filterung des Messverlaufs ergibt sich dabei zumindest grundsätzlich unabhängig davon, in welcher konkreten Weise der Messverlauf letztlich ausgewertet wird, um festzustellen, ob der zu detektierende aktive Leuchtzustand vorliegt oder nicht. Zudem ist die Band-Pass-Filterung durch die Einlernschritte speziell an die im aktiven Leuchtzustand von der jeweiligen Strahlungsquelle ausgesandte Strahlung angepasst. Da das Band-Pass-Filter zudem auf Daten und nicht auf die Strahlung selbst angewandt wird, die Filterung also elektronisch und nicht optisch erfolgt, kann das Band-Pass-Filter erforderlichenfalls, etwa bei einem Wechsel der zu untersuchenden Strahlungsquelle, in einfacher Weise neu angepasst werden, nämlich durch erneutes Durchführen der Einlernschritte. Somit ist das Verfahren besonders flexibel einsetzbar und lässt sich insbesondere zumindest weitgehend automatisieren. Zudem können gegebenenfalls unterschiedliche eingelernte Band-Pass-Charakteristiken gespeichert werden und bei Einsatz einer entsprechenden bekannten Strahlungsquelle eingesetzt werden.

Gemäß einer vorteilhaften Ausführungsform umfasst das Ermitteln der ersten Referenzintensität und der zweiten Referenzintensität, dass der erste Referenzverlauf und der zweite Referenzverlauf mittels des Band-Pass-Filters gefiltert werden und dass als Mittelwert des erste Referenzverlaufs ein Mittelwert des gefilterten ersten Referenzverlaufs herangezogen wird und als Mittelwert des zweiten Referenzverlaufs ein Mittelwert des gefilterten zweiten Referenzverlaufs herangezogen wird. Das hat insbesondere zur Folge, dass bei dieser Ausführungsform die Schaltschwelle nicht direkt auf Grundlage der erfassten ersten und zweiten Referenzintensitäten festgelegt wird, sondern die Referenzintensitäten zunächst mittels des ermittelten Band-Pass-Filters gefiltert werden und die Festlegung der Schaltschwelle dann anhand der gefilterten Referenzintensitäten erfolgt. Da die Schaltschwelle auch später bei der Durchführung der Messschritte auf den mittels des Band-Pass-Filters gefilterten Messverlauf angewandt wird, ist es zweckmäßig, bereits für die Festlegung der Schaltschwelle in den Einlernschritten entsprechend gefilterte Referenzverläufe heranzuziehen.

Eine vorteilhafte ergänzende Möglichkeit, die Strahlung, die in dem zu detektierenden aktiven Leuchtzustand von der jeweiligen Strahlungsquelle ausgesandt wird, von möglicher Hintergrundstrahlung zu unterscheiden, basiert auf der Farbe (optisches Spektrum) der Strahlung. Denn während etwa eine allgemeine Beleuchtung typischerweise im Wesentlichen weißes Licht umfasst, kann die jeweilige Strahlungsquelle, insbesondere wenn es sich um ein Status- oder Kontrolllämpchen oder ein hinterleuchtetes Symbol (z.B. Leuchtsymbol auf einem Armaturenbrett eines Fahrzeugs) handelt, Licht einer definierten Farbe, z.B. Rot, Gelb, Orange, Grün oder Blau, aussenden, anhand welcher dieses Licht von der Hintergrundbeleuchtung (oder zumindest von wesentlichen Teilen davon) unterschieden werden kann.

Grundsätzlich kann der genannte Strahlungssensor dazu ausgebildet sein, die Farbe der erfassten Strahlung erkennen zu können. Das ist jedoch für einfache Strahlungssensoren, die etwa auf einer Photodiode auf Silizium-Basis beruhen, in der Regel nicht der Fall. Ein solcher Strahlungssensor kann aber gleichwohl eine spezielle spektrale Empfindlichkeit aufweisen, d.h. lediglich für einen bestimmten Bereich des optischen Spektrums empfindlich sein, während Strahlung mit Frequenzen außerhalb dieses Bereichs nicht erfasst wird. Das kann auf einfache Weise z.B. dadurch erreicht werden, dass der Strahlungssensor mit einem optischen Filter versehen wird, welches nur denjenigen Frequenzbereich des optischen Spektrums passieren lässt, für den der jeweilige Strahlungssensor empfindlich sein soll.

Ist die Farbe der Strahlung, die in dem zu detektierenden aktiven Leuchtzustand von der jeweiligen Strahlungsquelle ausgesandt wird, stets dieselbe, kann als Strahlungssensor von vornherein ein für diese Farbe selektiv empfindlicher Strahlungssensor gewählt werden oder ein zunächst nicht farbselektiver Strahlungssensor mittels eines optischen Filters entsprechend farbselektiv gemacht werden. Vorzugsweise lässt sich das Verfahren zur Detektion aktiver Leuchtzustände von Strahlungsquellen aber nach Bedarf auch an die Farbe der von der jeweiligen Strahlungsquelle in dem jeweiligen aktiven Leuchtzustand ausgesandten Farbe anpassen.

Dies wird erfindungsgemäß dadurch erreicht, dass mehrere Strahlungssensoren verwendet werden, die sich hinsichtlich ihrer spektralen Empfindlichkeit unterscheiden, wobei für jeden der Strahlungssensoren jeweils die Einlernschritte durchgeführt werden und dem jeweiligen Strahlungssensor das dabei jeweils ermittelte Band-Pass-Filter und die dabei jeweils festgelegte Schaltschwelle zugeordnet werden, und wobei für jeden der Strahlungssensoren jeweils die Messschritte durchgeführt werden und dabei für das Filtern das dem jeweiligen Strahlungssensor zugeordnete Band-Pass-Filter herangezogen wird und für das Auswerten die dem jeweiligen Strahlungssensor zugeordnete Schaltschwelle herangezogen wird.

Durch die verschiedenen Strahlungssensoren können auf diese Weise mehrere verschiedene Bereiche des optischen Spektrums abgedeckt werden, wobei sich die spektralen Empfindlichkeiten der Strahlungssensoren zumindest teilweise überlappen können, aber auch Bereiche des optischen Spektrums verbleiben können, die durch keinen Strahlungssensor abgedeckt werden. Durch das Kombinieren der, insbesondere parallel erfolgenden, Messungen mit unterschiedlich farbselektiven Strahlungssensoren kann insgesamt auf die Farbe der jeweils erfassten Strahlung geschlossen werden. Dazu können beispielsweise drei Strahlungssensoren, die spektrale Empfindlichkeiten etwa im Bereich der Farben Rot, Grün und Blau aufweisen, ausreichen. Zusätzlich zu einer gewissen Anzahl farbselektiver Strahlungssensoren kann zudem noch ein nicht farbselektiver Strahlungssensor vorgesehen werden, dessen spektrale Empfindlichkeit sich also zumindest im Wesentlichen über das gesamte Farbspektrum erstreckt, um ergänzend auch die allgemeine Helligkeit der Strahlung zu erfassen.

Wenn erfindungsgemäß mehrere Strahlungssensoren mit unterschiedlicher spektraler Empfindlichkeit genutzt werden, um zusätzlich zu der Band-Pass-Filterung auch die Farbe der eintreffenden Strahlung zu berücksichtigen, werden die Einlernschritte und die Messschritte gemäß der genannten Ausführungsform zumindest im Wesentlichen für jeden Strahlungssensor gesondert durchgeführt. Das führt dazu, dass für jeden Strahlungssensor ein jeweiliges Band-Pass-Filter ermittelt sowie eine jeweilige Schaltschwelle festgelegt wird, die anschließend zur Filterung der mittels dieses Strahlungssensors erfassten Messverläufe bzw. zur Auswertung der so gefilterten Messverläufe herangezogen werden. Letztlich kann somit für jeden der Strahlungssensoren eine Feststellung darüber getroffen werden, ob der jeweilige der spektralen Empfindlichkeit des jeweiligen Strahlungssensors entsprechende Anteil der insgesamt auf die Strahlungssensoren treffenden Strahlung als Hinweis auf das Vorliegen des zu detektierenden aktiven Leuchtzustands gewertet wird oder nicht.

Dabei kann vorgesehen sein, dass die Ergebnisse dieser Feststellungen anschließend separat zur Verfügung stehen, also etwa einzeln ausgegeben werden. Die einzelnen Ergebnisse können aber auch zu einem Gesamtergebnis zusammengeführt werden. Insofern umfasst das Verfahren vorzugsweise einen zusätzlichen Schritt, gemäß welchem die Ergebnisse des für jeden Strahlungssensor jeweils im Rahmen der genannten Messschritte durchgeführten Auswertens übergeordnet ausgewertet werden. Insbesondere wird für diese übergeordnete Auswertung verglichen, wie viele und/oder welche der einzelnen Ergebnisse positiv ausfallen, also für ein Vorliegen des zu detektierenden aktiven Leuchtzustands sprechen. Die übergeordnete Auswertung kann beispielsweise nur genau dann zu dem Ergebnis führen, dass der zu detektierende aktive Leuchtzustand vorliegt, wenn alle einzelnen Ergebnisse positiv sind. Es kann aber auch eine Gewichtung der einzelnen Ergebnisse untereinander erfolgen. Beispielsweise können Ergebnisse von Strahlungssensoren, deren spektrale Empfindlichkeit keine oder kaum Übereinstimmung mit der Farbe der von der jeweiligen Lichtquelle ausgesandten Strahlung aufweist, schwächer gewichtet werden oder vollständig unberücksichtigt bleiben.

Erfindungsgemäß umfasst das Verfahren vor dem Durchführen der Einlernschritte und der Messschritte ferner, dass ein in fester räumlicher Beziehung zu dem Strahlungssensor (bzw. zu der Anordnung der mehreren Strahlungssensoren) ausgerichteter Positionierungsstrahl ausgesandt wird und der Strahlungssensor (bzw. die Anordnung der Strahlungssensoren) derart platziert wird, dass der Positionierungsstrahl auf eine vorgegebene Stelle relativ zu der jeweiligen Strahlungsquelle trifft. Insbesondere kann vorgesehen sein, dass der Strahlungssensor derart zu platzieren ist, dass der Positionierungsstrahl direkt auf die jeweilige Strahlungsquelle trifft. Damit die Platzierung des Strahlungssensors einfach mit bloßem Auge durchgeführt werden kann, ist der Positionierungsstrahl vorzugsweise im sichtbaren Wellenlängenbereich. Ein solcher Positionierungsstrahl die korrekte Anordnung des Strahlungssensors relativ zu der Strahlungsquelle, deren aktiver Leuchtzustand detektiert werden soll, erheblich vereinfachen.

Dabei kann der Positionierungsstrahl auch dabei helfen, den Strahlungssensors in einem geeigneten Abstand zur Strahlungsquelle zu platzieren, beispielsweise indem der Positionierungsstrahl zwei Strahlen umfasst, die sich in dem korrekten Abstand kreuzen, so dass bei korrekt eingestelltem Abstand auf der Strahlungsquelle ein Leuchtpunkt erscheint, bei falsch eingestelltem Abstand hingegen zwei Leuchtpunkte erscheinen. Der Positionierungsstrahl kann auch auf einen bestimmten Abstand fokussiert sein, so dass ein Muster oder eine Kontur des Positionierungsstrahls nur dann scharf erscheint, wenn der korrekte Abstand eingestellt ist.

Da der Positionierungsstrahl zwar bei der Platzierung des Strahlungssensors helfen kann, bezüglich der Detektion aber als Hintergrundstrahlung anzusehen ist, ist es bevorzugt, wenn kein Positionierungsstrahl ausgesandt wird, während einer der genannten Referenzverläufe und/oder einer der genannten Messverläufe erfasst wird. Auch wenn an dem Strahlungssensor oder einer den Strahlungssensor umfassenden opto-elektronischen Sensoreinheit (die auch mehrere Strahlungssensoren umfassen kann) sonstige interne Strahlungsquellen vorgesehen sind, soll deren Strahlung nach Möglichkeit die Messung nicht als zusätzliche Hintergrundstrahlung stören. Daher ist es ferner bevorzugt, wenn eine den Strahlungssensor umfassende opto-elektronische Sensoreinheit zur Detektion aktiver Leuchtzustände von Strahlungsquellen keine Strahlung aussendet, während einer der genannten Referenzverläufe und/oder einer der genannten Messverläufe erfasst wird.

Gemäß einer weiteren vorteilhaften Ausführungsform durchläuft die auf den Strahlungssensor treffende Strahlung zuvor ein optisches Filter zum Eingrenzen des Wellenlängenbereichs der Strahlung, insbesondere auf einen Spektralbereich infraroter Strahlung, und /oder ein Polarisationsfilter. Durch derartige Filter kann ein jeweiliger Strahlungssensor für Strahlung eines speziellen Wellenlängenbereichs bzw. einer speziellen Polarisation selektiv gemacht werden. Für typische Anwendungen kann beispielsweise ein Satz verschiedener Filter zur Verfügung stehen. Wenn für die Messung einer bestimmten Strahlungsquelle etwa speziell infrarote Strahlung erfasst werden oder die Polarisation der Strahlung berücksichtigt werden soll, kann einfach ein entsprechendes Filter vor dem Strahlungssensor eingesetzt werden.

In ähnlicher Weise kann es zusätzlich oder alternativ vorteilhaft sein, wenn die auf den Strahlungssensor treffende Strahlung zuvor ein Konversionsmaterial zum Modifizieren des Spektralbereichs der Strahlung, insbesondere zum Umwandeln ultravioletter Strahlung in Strahlung eines sichtbaren Spektralbereichs, durchläuft. Das ermöglicht es, zum Erfassen ultravioletter Strahlung einen Strahlungssensor zu verwenden, der im Bereich ultravioletter Strahlung eigentlich nicht absorbiert. Mittels derartiger Hilfsmittel kann sich somit der optische Spektralbereich, der für die Detektion aktiver Leuchtzustände einer Strahlungsquelle berücksichtigt werden kann, vom Bereich infraroter Strahlung über den Bereich sichtbaren Lichts bis in den Bereich ultravioletter Strahlung erstrecken.

Des Weiteren ist es bevorzugt, dass die Messschritte in Echtzeit durchgeführt werden. Insbesondere können die Messschritte auf diese Weise fortlaufend ausgeführt werden, so dass kontinuierlich Messverläufe erfasst und ausgewertet werden und kontinuierlich die Ergebnisse der Auswertungen ausgegeben werden können. Die Zeit für die Durchführung der Messschritte ist dabei vorzugsweise kürzer als die Periode einer gewünschten Schaltfrequenz, die beispielsweise im Bereich von 25 bis 50 Hz liegen kann, so dass der jeweilige Leuchtzustand der jeweiligen Strahlungsquelle innerhalb von etwa 0,02 bis 0,04 Sekunden detektiert und ausgegeben werden kann.

Die opto-elektronische Sensoreinheit zur Detektion aktiver Leuchtzustände von Strahlungsquellen, welche die eingangs genannte Aufgabe löst, umfasst zumindest einen Strahlungssensor, insbesondere zumindest eine Photodiode, zum Erfassen zeitlicher Verläufe der Intensität von auf den Strahlungssensor treffender Strahlung sowie eine Auswerteeinheit, insbesondere mit zumindest einer Recheneinheit, z.B. einem Mikrocontroller, und ist dazu ausgebildet, das genannte Verfahren gemäß zumindest einer der vorstehend beschriebenen Ausführungsformen auszuführen. Die Vorteile der opto-elektronischen Sensoreinheit ergeben sich dabei insbesondere durch die Ausführung des jeweiligen Verfahrens und entsprechen somit im Wesentlichen dessen Vorteilen.

Dabei umfasst die opto-elektronische Sensoreinheit mehreren Strahlungssensoren, die sich hinsichtlich ihrer spektralen Empfindlichkeit unterscheiden. Dies ermöglicht die Durchführung einer der vorstehend beschriebenen Ausführungsformen des genannten Verfahrens, bei denen die Einlernschritte und die Messschritte für die spektral unterschiedlich empfindlichen Strahlungssensoren jeweils gesondert durchgeführt werden, um zusätzlich auch die Farbe der auf die opto-elektronische Sensoreinheit treffenden Strahlung für die Detektion zu berücksichtigen.

Des Weiteren ist es bevorzugt, wenn die opto-elektronische Sensoreinheit als Strahlungssensor eine Anordnung mehrerer Photodioden, insbesondere mit übereinstimmender spektraler Empfindlichkeit, umfasst und dazu ausgebildet ist, derart angeordnet zu werden, dass von der jeweiligen Strahlungsquelle ausgesandte Strahlung lediglich auf eine Teilmenge der Photodioden, jedoch nicht auf die übrigen Photodioden der Anordnung trifft. Eine solche Anordnung wird auch als Photoarray bezeichnet und ermöglicht, mittels der Photodioden, auf die keine von der jeweiligen Strahlungsquelle ausgesandte Strahlung trifft, während der laufenden Messung auch dann, wenn sich die Strahlungsquelle im aktiven Leuchtzustand befindet, die Hintergrundstrahlung gesondert zu erfassen. Auf diese Weise können beispielsweise Schwankungen der Hintergrundstrahlung erkannt werden, worauf dann, beispielsweise durch eine Anpassung der Schaltschwelle, reagiert werden kann.

Ferner kann die jeweilige Teilmenge der Photodioden, auf die von der Strahlungsquelle ausgesandte Strahlung trifft, von der räumlichen Beziehung zwischen der opto-elektronischen Sensoreinheit und der jeweiligen Strahlungsquelle abhängen. Auf welche der Photodioden von der Strahlungsquelle ausgesandte Strahlung jeweils trifft, hängt dann also davon ab, wo die Strahlungsquelle sich im Blickfeld der opto-elektronischen Sensoreinheit befindet. Auf diese Weise kann die opto-elektronische Sensoreinheit auch eine Positionsinformation über die Strahlungsquelle liefern.

Des Weiteren kann die opto-elektronische Sensoreinheit eine interne Strahlungsquelle, insbesondere eine LED, zum Aussenden eines Positionierungsstrahls, insbesondere des vorstehend beschriebenen Positionierungsstrahls, umfassen. Ferner können eine oder mehrere Linsen zur Fokussierung des Positionierungsstrahls und/oder der eintreffenden Strahlung auf den Strahlungssensor vorgesehen sein.

Gemäß einer weiteren vorteilhaften Ausführungsform umfasst die opto-elektronische Sensoreinheit ein optisches Filter zum Eingrenzen des Spektralbereichs der auf den Strahlungssensor treffenden Strahlung, insbesondere auf einen Spektralbereich infraroter Strahlung, ein Polarisationsfilter und/oder ein Konversionsmaterial zum Modifizieren des Spektralbereichs der auf den Strahlungssensor treffenden Strahlung, insbesondere zum Umwandeln ultravioletter Strahlung in Strahlung eines sichtbaren Spektralbereichs. Die Vorteile derartiger Ergänzungen der opto-elektronischen Sensoreinheit ergeben sich in entsprechender Weise wie vorstehend für die entsprechende Ausführungsform des genannten Verfahrens.

Des Weiteren kann die opto-elektronische Sensoreinheit vorteilhafterweise einen oder mehrere Lichtleiter umfassen, die jeweils dazu ausgebildet sind, mit einem Ende benachbart zu einer jeweiligen Strahlungsquelle angeordnet zu werden und von der jeweiligen Strahlungsquelle ausgesandte Strahlung zum Strahlungssensor zu leiten. Wenn die Strahlung einer jeweiligen Strahlungsquelle mittels eines Lichtleiters zu dem Strahlungssensor geleitet wird, muss die Strahlungsquelle dazu vergleichsweise präzise in der Nähe des entsprechenden Endes des Lichtleiters angeordnet sein. Daher kann durch die Verwendung des Lichtleiters insofern eine positionsselektive Messung erreicht werden, als daran, dass überhaupt von der Strahlungsquelle ausgesandte Strahlung den Strahlungssensor erreicht, überprüft werden kann, ob die Strahlungsquelle korrekt positioniert ist.

Durch Verwendung mehrerer Lichtleiter kann die Strahlung mehrerer Strahlungsquellen gleichzeitig zu dem bzw. einem jeweiligen Strahlungssensor der opto-elektronischen Sensoreinheit geleitet werden. Dies ermöglicht es, mit einem einzigen Gerät die Leuchtzustände von an mehreren verschiedenen Positionen angeordneten Strahlungsquellen, vorzugsweise zumindest im Wesentlichen gleichzeitig, zu detektieren.

Die Erfindung wird nachfolgend lediglich beispielhaft unter Bezugnahme auf die Figuren weiter erläutert.
- Fig. 1: zeigt in schematischer Darstellung ein Beispiel einer optoelektronischen Sensoreinheit.
- Fig. 2: zeigt in schematischer Darstellung den Ablauf der Einlernschritte gemäß einem Beispiel.
- Fig. 3: zeigt in schematischer Darstellung den Ablauf der Messschritte gemäß einem Beispiel.

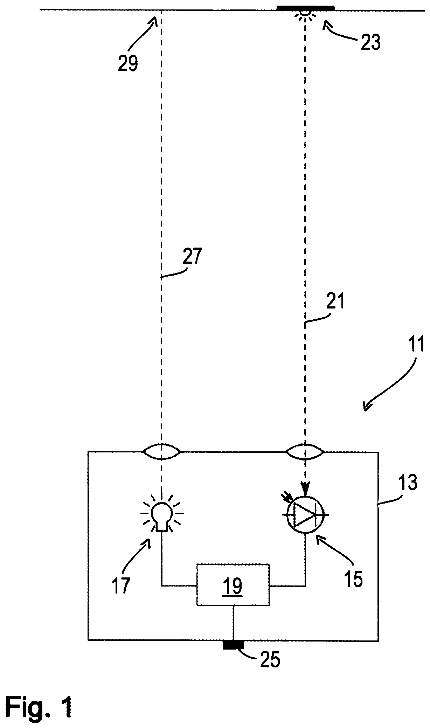

In Fig. 1 ist ein Beispiel einer opto-elektronischen Sensoreinheit 11 gezeigt. Die Sensoreinheit 11 weist in einem gemeinsamen Gehäuse 13 einen auf einer Photodiode basierenden Strahlungssensor 15 sowie eine interne Strahlungsquelle 17 auf, die insbesondere als LED ausgebildet ist. Der Strahlungssensor 15 und die interne Strahlungsquelle 17 sind mit einer Auswerte- und Steuereinheit 19 verbunden, die beispielsweise einen Mikrocontroller umfasst und dazu ausgebildet ist, den Strahlungssensor 15 und die interne Strahlungsquelle 17 anzusteuern sowie ein Messsignal vom Strahlungssensor 15 zu empfangen, welches die Intensität der auf den Strahlungssensor 15 treffenden und von dem Strahlungssensor 15 erfassten Strahlung 21 widerspiegelt. Die Strahlung 21, die auf den Strahlungssensor 15 trifft, setzt sich aus nicht dargestellter Hintergrundstrahlung sowie Strahlung zusammen, die von einer Strahlungsquelle 23 ausgesandt wird, wenn diese sich in einem aktiven Leuchtzustand befindet.

Die Auswerte- und Steuereinheit 19 ist ferner dazu ausgebildet, aus dem von dem Strahlungssensor 15 empfangenen Messsignal mit einer bestimmten Taktfrequenz einzelne Messwerte abzuleiten und basierend auf diesen Messwerten das beschriebene Verfahren durchzuführen, insbesondere anhand des Messsignals Referenzverläufe oder Messverläufe der Intensität der auftreffenden Strahlung 21 zu erfassen, in den Einlernschritten ein Band-Pass-Filter zu ermitteln und eine Schaltschwelle festzulegen sowie in den Messschritten unter Anwendung des Band-Pass-Filters und der Schaltschwelle festzustellen, ob der zu detektierende aktive Leuchtzustand der Strahlungsquelle 23 vorliegt oder nicht. Über einen mit der Auswerte- und Steuereinheit 19 verbundenen Signalausgang 25 kann das Ergebnis der Auswertung ausgegeben werden. Insbesondere wird ein positives Schaltsignal ausgegeben, wenn die Auswertung zu dem Ergebnis gelangt ist, dass der aktive Leuchtzustand der Strahlungsquelle 23 vorliegt, und kein oder ein negatives Schaltsignal ausgegeben, wenn die Auswertung zu dem Ergebnis gelangt ist, dass ein inaktiver Leuchtzustand der Strahlungsquelle 23 vorliegt. Wenn verschiedene aktive Leuchtzustände unterschieden werden, können für die verschiedenen Leuchtzustände verschiedene positive Schaltsignale ausgegeben werden.

Angesteuert durch die Auswerte- und Steuereinheit 19 kann die interne Strahlungsquelle 17 einen Positionierungsstrahl 27 aussenden, anhand dessen die opto-elektronische Sensoreinheit 11 relativ zu der zu untersuchenden Strahlungsquelle 23 im Hinblick auf eine zuverlässige Erfassung eines jeweiligen aktiven Leuchtzustands geeignet platziert werden kann. Im nicht maßstabsgetreu dargestellten Beispiel ist die opto-elektronischen Sensoreinheit 11 dann optimal platziert, wenn ein von dem Positionierungsstrahl 27 erzeugter Lichtfleck 29 zumindest nahezu auf der Strahlungsquelle 23 zu liegen kommt. Aufgrund der Parallaxe zwischen der internen Strahlungsquelle 17 und dem Strahlungssensor 15 kann der Lichtfleck 29 auch wie dargestellt geringfügig gegenüber der Strahlungsquelle 23 versetzt sein. Die interne Strahlungsquelle 17 wird nur zum Aussenden des Positionierungsstrahls 27 angesteuert, solange kein Einlernen oder Messen erfolgt. Wenn der Strahlungssensor 15 zum Erfassen von auf ihn auftreffender Strahlung 21 im Rahmen des beschriebenen Verfahrens genutzt wird, wird der Positionierungsstrahl 27 dagegen nicht ausgesandt.

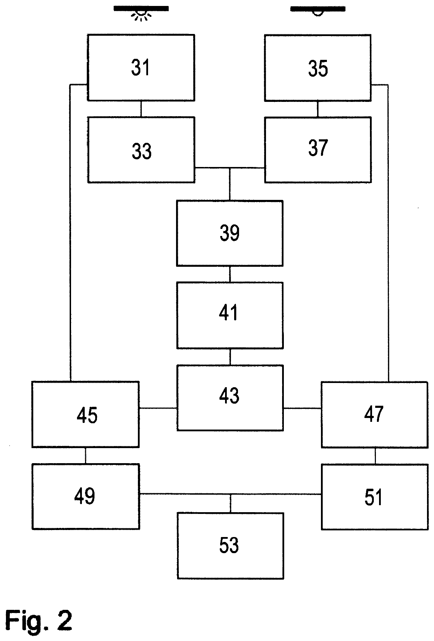

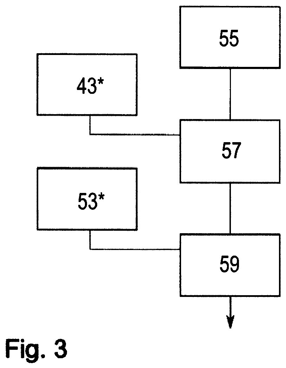

Durch die Fig. 2 und 3 wird der Ablauf des im Wesentlichen von der Auswerte- und Steuereinheit 19 durchgeführten Verfahrens illustriert. Dabei werden durch Fig. 2 die Einlernschritte veranschaulicht, die zur Anpassung des Verfahrens an die in dem zu detektierenden aktiven Leuchtzustand der jeweiligen Strahlungsquelle 23 ausgesandte Strahlung 21 sowie zur Anpassung an die jeweilige Hintergrundstrahlung zumindest einmal durchzuführen sind.

Zunächst wird in Schritt 31 bei in den aktiven Leuchtzustand versetzter Strahlungsquelle 23 (vgl. entsprechendes Symbol in Fig. 2 oben links) ein erster zeitlicher Referenzverlauf der Intensität von auf den Strahlungssensor 15 treffender Strahlung 21 mittels des Strahlungssensors 15 erfasst und in Schritt 33 in die Frequenzdomäne transformiert, um dadurch ein erstes Referenzspektrum zu ermitteln. In entsprechender Weise wird in Schritt 35 bei in den inaktiven Leuchtzustand versetzter Strahlungsquelle 23 (vgl. entsprechendes Symbol in Fig. 2 oben rechts) ein zweiter zeitlicher Referenzverlauf der Intensität von auf den Strahlungssensor 15 treffender Strahlung 21 mittels des Strahlungssensors 15 erfasst und in Schritt 37 in die Frequenzdomäne transformiert, um dadurch ein zweites Referenzspektrum zu ermitteln. Das Erfassen der Referenzverläufe erfolgt dabei mit einer Abtastrate im Kiloherzbereich, so dass höhere Frequenzen nicht erfasst werden können und sich das jeweilige Referenzspektrum folglich nicht auf die Farbe der Strahlung 21 bezieht, sondern auf niedrigerfrequente Intensitätsschwankungen oder -modulationen, insbesondere für die jeweilige Strahlungsquelle 23 charakteristische oder ihr aufgeprägte Modulationen.

In Schritt 39 wird ein Differenzspektrum ermittelt, indem das zweite Referenzspektrum von dem ersten Referenzspektrum abgezogen wird. Dieses Differenzspektrum wird bei dem veranschaulichten Beispiel anschließend in Schritt 41 in die Zeitdomäne transformiert und stellt dann die Impulsantwort eines (gegebenenfalls Multi-)Band-Pass-Filters des FIR-Typs (Finite-Impulse-Response) dar, welches speziell diejenigen Frequenzen freistellt, mit welchen die Intensität der von der Strahlungsquelle 23 im aktiven Leuchtzustand ausgesandten Strahlung 21 moduliert ist. Dieses Band-Pass-Filter wird in Schritt 43 zu dem als Impulsantwort interpretierten Differenzspektrum ermittelt und stellt dann ein erstes Ergebnis der Einlernschritte dar, das dann später bei der Durchführung der Messschritte genutzt werden kann (vgl. Band-Pass-Filter 43* in Fig. 3). Grundsätzlich kann der Schritt 41 aber auch entfallen und das Band-Pass-Filter in Schritt 43 auf eine andere Weise auf dem in Schritt 39 ermittelten Differenzspektrum basierend ermittelt werden, die keine Transformation des Differenzspektrums in die Zeitdomäne voraussetzt.

Außerdem wird das Band-Pass-Filter bei dem vorliegenden Beispiel auch für die weiteren Einlernschritte zur Festlegung einer Schaltschwelle genutzt. Dazu werden in den Schritten 45 und 47 der erste bzw. der zweite Referenzverlauf mittels des Band-Pass-Filters gefiltert. Anschließend wird in Schritt 49 eine erste Referenzintensität als Mittelwert des gefilterten ersten Referenzverlaufs und in Schritt 51 eine zweite Referenzintensität als Mittelwert des gefilterten zweiten Referenzverlaufs ermittelt. Schließlich wird in Schritt 53 basierend auf der ersten Referenzintensität und der zweiten Referenzintensität die Schaltschwelle (zum Beispiel auf eine der oben beschriebenen Arten) festgelegt, die angibt, ab welcher gemessenen (mittleren) Intensität vom Vorliegen des zu detektierenden aktiven Leuchtzustands ausgegangen werden soll. Somit stellt die Schaltschwelle ein zweites Ergebnis der Einlernschritte dar, das später bei der Durchführung der Messschritte genutzt werden kann (vgl. Schaltschwelle 53* in Fig. 3).

Die Messschritte dienen der eigentlichen Feststellung, ob der zu detektierende aktive Leuchtzustand der jeweiligen Strahlungsquelle 23 vorliegt oder nicht. Dabei kann fortlaufend die auf den Strahlungssensor 15 treffende Strahlung 21 erfasst und im Hinblick auf diese Feststellung ausgewertet werden, ohne dass die Einlernschritte jeweils erneut durchgeführt werden müssten. Lediglich wenn ein andere aktiver Leuchtzustand und/oder ein aktiver Leuchtzustand einer anderen Strahlungsquelle 23 detektiert werden soll, ist es zweckmäßig, die Einlernschritte erneut durchzuführen, um das Band-Pass-Filter und die Schaltschwelle in geeigneter Weise anzupassen.

Die Messschritte sind in Fig. 3 veranschaulicht und umfassen zunächst den Schritt 55, in dem mittels des Strahlungssensors 15 ein zeitlicher Messverlauf der Intensität der auf den Strahlungssensor 15 treffender Strahlung 21 erfasst wird. Dieser Messverlauf wird anschließend in Schritt 57 mittels des in den Einlernschritten ermittelten Band-Pass-Filters 43* gefiltert, um die Einflüsse der Hintergrundstrahlung auf den Messverlauf zu entfernen oder zumindest zu reduzieren. In Schritt 59 schließlich wird der gefilterte Messverlauf ausgewertet, was anhand der in den Einlernschritten festgelegten Schaltschwelle 53* erfolgt. Beispielsweise kann aus dem gefilterten Messverlauf eine mittlere Intensität ermittelt werden, die dann einfach mit der Schaltschwelle 53* verglichen wird. Das Ergebnis der Auswertung wird dann vorzugsweise über den Signalausgang 25 ausgegeben (vgl. Pfeil in Fig. 3).

### Bezugszeichen

- 11: Opto-elektronische Sensoreinheit
- 13: Gehäuse
- 15: Strahlungssensor
- 17: interne Lichtquelle
- 19: Auswerte- und Steuereinheit
- 21: Strahlung
- 23: Strahlungsquelle
- 25: Signalausgang
- 27: Positionierungsstrahl
- 29: Lichtfleck
- 31-59: Verfahrensschritte
- 43*: Band-Pass-Filter
- 53*: Schaltschwelle

## Patentansprüche

1. Verfahren zur Detektion aktiver Leuchtzustände von Strahlungsquellen (23) umfassend die folgenden für einen jeweiligen aktiven Leuchtzustand einer jeweiligen Strahlungsquelle (23) zumindest einmal durchzuführenden Einlernschritte:
- mittels eines Strahlungssensors (15) bei in den aktiven Leuchtzustand versetzter Strahlungsquelle (23) Erfassen eines ersten zeitlichen Referenzverlaufs der Intensität von auf den Strahlungssensor (15) treffender Strahlung (21),
- mittels des Strahlungssensors (15) bei in einen inaktiven Leuchtzustand versetzter Strahlungsquelle (23) Erfassen eines zweiten zeitlichen Referenzverlaufs der Intensität von auf den Strahlungssensor (15) treffender Strahlung (21),
- Ermitteln eines ersten Referenzspektrums durch Transformieren des ersten Referenzverlaufs in die Frequenzdomäne und eines zweiten Referenzspektrums durch Transformieren des zweiten Referenzverlaufs in die Frequenzdomäne,
- Ermitteln eines Differenzspektrums als Differenz des ersten Referenzspektrums und des zweiten Referenzspektrums,
- Ermitteln eines Band-Pass-Filters (43*) basierend auf dem Differenzspektrum;
- Ermitteln einer ersten Referenzintensität als Mittelwert des ersten Referenzverlaufs und einer zweiten Referenzintensität als Mittelwert des zweiten Referenzverlaufs,
- Festlegen einer Schaltschwelle (53*) basierend auf der ersten Referenzintensität und der zweiten Referenzintensität;
sowie die folgenden für die Detektion des jeweiligen aktiven Leuchtzustands der jeweiligen Strahlungsquelle (23), insbesondere fortlaufend, durchzuführenden Messschritte:
- mittels des Strahlungssensors (15) Erfassen eines zeitlichen Messverlaufs der Intensität von auf den Strahlungssensor (15) treffender Strahlung (21),
- Filtern des Messverlaufs mittels des Band-Pass-Filters (43*), und
- Auswerten des gefilterten Messverlaufs anhand der Schaltschwelle (53*),
wobei mehrere Strahlungssensoren (15) verwendet werden, die sich hinsichtlich ihrer spektralen Empfindlichkeit unterscheiden,
wobei für jeden der Strahlungssensoren (15) jeweils die Einlernschritte durchgeführt werden und dem jeweiligen Strahlungssensor (15) das dabei jeweils ermittelte Band-Pass-Filter (43*) und die dabei jeweils festgelegte Schaltschwelle (53*) zugeordnet werden,
wobei für jeden der Strahlungssensoren (15) jeweils die Messschritte durchgeführt werden und dabei für das Filtern das dem jeweiligen Strahlungssensor (15) zugeordnete Band-Pass-Filter (43*) herangezogen wird und für das Auswerten die dem jeweiligen Strahlungssensor (15) zugeordnete Schaltschwelle (53*) herangezogen wird,
und wobei das Verfahren vor dem Durchführen der Einlernschritte und der Messschritte ferner umfasst:
- Aussenden eines in fester räumlicher Beziehung zu dem Strahlungssensor (15) ausgerichteten Positionierungsstrahls (27), und
- Platzieren des Strahlungssensors (15) relativ zu der jeweiligen Strahlungsquelle (23) im Hinblick auf eine zuverlässige Erfassung eines jeweiligen aktiven Leuchtzustands derart, dass der Positionierungsstrahl (27) auf eine vorgegebene Stelle relativ zu der jeweiligen Strahlungsquelle (23) trifft, insbesondere derart, dass der Positionierungsstrahl (27) auf die jeweilige Strahlungsquelle (23) trifft.

2. Verfahren nach Anspruch 1,
wobei das Ermitteln des Band-Pass-Filters (43*) umfasst:
- Ermitteln eines Band-Pass-Filters (43*) mit einem Durchlassbereich, dessen Minimalfrequenz, dessen Maximalfrequenz und/oder dessen Breite aus dem Differenzspektrum abgeleitet wird/werden.

3. Verfahren nach Anspruch 1 oder 2,
wobei das Ermitteln des Band-Pass-Filters (43*) umfasst:
- Transformieren des Differenzspektrums in die Zeitdomäne, und
- Ermitteln eines Band-Pass-Filters (43*) zu einer Impulsantwort, die dem transformierten Differenzspektrum entspricht.

4. Verfahren nach zumindest einem der vorstehenden Ansprüche,
wobei das Ermitteln der ersten Referenzintensität und der zweiten Referenzintensität umfasst, dass der erste Referenzverlauf und der zweite Referenzverlauf mittels des Band-Pass-Filters (43*) gefiltert werden und dass als Mittelwert des ersten Referenzverlaufs ein Mittelwert des gefilterten ersten Referenzverlaufs herangezogen wird und als Mittelwert des zweiten Referenzverlaufs ein Mittelwert des gefilterten zweiten Referenzverlaufs herangezogen wird.

5. Verfahren nach zumindest einem der vorstehenden Ansprüche,
wobei das Verfahren ferner den folgenden Schritt umfasst:
- übergeordnetes Auswerten der Ergebnisse des für jeden Strahlungssensor (15) jeweils im Rahmen der Messschritte durchgeführten Auswertens.

6. Verfahren nach zumindest einem der vorstehenden Ansprüche,
wobei kein Positionierungsstrahl (27) ausgesandt wird, während einer der genannten Referenzverläufe und/oder einer der genannten Messverläufe erfasst wird.

7. Verfahren nach zumindest einem der vorstehenden Ansprüche,
wobei eine den Strahlungssensor (15) umfassende opto-elektronische Sensoreinheit (11) zur Detektion aktiver Leuchtzustände von Strahlungsquellen (23) keine Strahlung (21) aussendet, während einer der genannten Referenzverläufe und/oder einer der genannten Messverläufe erfasst wird.

8. Verfahren nach zumindest einem der vorstehenden Ansprüche,
wobei die auf den Strahlungssensor (15) treffende Strahlung (21) zuvor ein optisches Filter zum Eingrenzen des Spektralbereichs der Strahlung, insbesondere auf einen Spektralbereich infraroter Strahlung, und /oder ein Polarisationsfilter durchläuft.

9. Verfahren nach zumindest einem der vorstehenden Ansprüche,
wobei die auf den Strahlungssensor (15) treffende Strahlung (21) zuvor ein Konversionsmaterial zum Modifizieren des Spektralbereichs der Strahlung (21), insbesondere zum Umwandeln ultravioletter Strahlung in Strahlung eines sichtbaren Spektralbereichs, durchläuft.

10. Verfahren nach zumindest einem der vorstehenden Ansprüche,
wobei die Messschritte in Echtzeit durchgeführt werden.

11. Opto-elektronische Sensoreinheit (11) zur Detektion aktiver Leuchtzustände von Strahlungsquellen (23), die zumindest einen Strahlungssensor (15), insbesondere zumindest eine Photodiode, zum Erfassen zeitlicher Verläufe der Intensität von auf den Strahlungssensor (15) treffender Strahlung (21) sowie eine Auswerteeinheit (19), insbesondere mit zumindest einer Recheneinheit, umfasst und dazu ausgebildet ist, ein Verfahren nach zumindest einem der vorstehenden Ansprüche auszuführen,
wobei die opto-elektronische Sensoreinheit (11) mehrere Strahlungssensoren (15) umfasst, die sich hinsichtlich ihrer spektralen Empfindlichkeit unterscheiden.

12. Opto-elektronische Sensoreinheit nach Anspruch 11,
die als Strahlungssensor (15) eine Anordnung mehrerer Photodioden, insbesondere mit übereinstimmender spektraler Empfindlichkeit, umfasst und dazu ausgebildet ist, derart angeordnet zu werden, dass von der jeweiligen Strahlungsquelle (23) ausgesandte Strahlung (21) lediglich auf eine Teilmenge der Photodioden, jedoch nicht auf die übrigen Photodioden der Anordnung trifft.

13. Opto-elektronische Sensoreinheit nach Anspruch 11 oder 12,
die ferner eine interne Strahlungsquelle (17), insbesondere eine LED, zum Aussenden des Positionierungsstrahls (27) umfasst.

14. Opto-elektronische Sensoreinheit nach zumindest einem der Ansprüche 11 bis 13,
die ein optisches Filter zum Eingrenzen des Spektralbereichs der auf den Strahlungssensor (15) treffenden Strahlung (21), insbesondere auf einen Spektralbereich infraroter Strahlung, ein Polarisationsfilter und/oder ein Konversionsmaterial zum Modifizieren des Spektralbereichs der auf den Strahlungssensor (15) treffenden Strahlung (21), insbesondere zum Umwandeln ultravioletter Strahlung in Strahlung eines sichtbaren Spektralbereichs, umfasst.

15. Opto-elektronische Sensoreinheit nach zumindest einem der Ansprüche 11 bis 14,
der ferner einen oder mehrere Lichtleiter umfasst, die jeweils dazu ausgebildet sind, mit einem Ende benachbart zu einer jeweiligen Strahlungsquelle (23) angeordnet zu werden und von der jeweiligen Strahlungsquelle (23) ausgesandte Strahlung (21) zum Strahlungssensor (15) zu leiten.

## Claims

1. A method of detecting active lighting states of radiation sources (23) comprising the following teaching steps to be carried out at least once for a respective active lighting state of a respective radiation source (23):
- detecting a first temporal reference progression of the intensity of radiation (21) incident on the radiation sensor (15) by means of a radiation sensor (15) when the radiation source (23) is set into the active lighting state;
- detecting a second temporal reference progression of the intensity of radiation (21) incident on the radiation sensor (15) by means of the radiation sensor (15) when the radiation source (23) is set into an inactive lighting state;
- determining a first reference spectrum by transforming the first reference progression into the frequency domain and determining a second reference spectrum by transforming the second reference progression into the frequency domain;
- determining a difference spectrum as the difference of the first reference spectrum and the second reference spectrum;
- determining a bandpass filter (43*) on the basis of the difference spectrum;
- determining a first reference intensity as a mean value of the first reference progression and determining a second reference intensity as a mean value of the second reference progression;
- defining a switching threshold (53*) on the basis of the first reference intensity and the second reference intensity;
and the following measurement steps to be carried out, in particular continuously, for the detection of the respective active lighting state of the respective radiation source (23):
- detecting a temporal measurement progression of the intensity of radiation (21) incident on the radiation sensor (15) by means of the radiation sensor (15);
- filtering the measurement progression by means of the bandpass filter (43*); and
- evaluating the filtered measurement progression on the basis of the switching threshold (53*),
wherein a plurality of radiation sensors (15) are used which differ with respect to their spectral sensitivity;
wherein the respective teaching steps are carried out for each of the radiation sensors (15) and the respective bandpass filter (43*) determined in so doing and the respective switching threshold (53*) defined in so doing are associated with the respective radiation sensor (15);
wherein the respective measurement steps are carried out for each of the radiation sensors (15) and the bandpass filter (43*) associated with the respective radiation sensor (15) is in this respect used for the filtering and the switching threshold (53*) associated with the respective radiation sensor (15) is used for the evaluation;
and wherein the method, prior to the carrying out of the teaching steps and the measurement steps, further comprises:
- transmitting a positioning beam (27) oriented in a fixed spatial relationship with respect to the radiation sensor (15); and
- placing the radiation sensor (15) relative to the respective radiation source (23) with respect to a reliable detection of a respective active lighting state such that the positioning beam (27) is incident on a predefined position relative to the respective radiation source (23), in particular such that the positioning beam (27) is incident on the respective radiation source (23).

2. A method in accordance with claim 1,
wherein the determination of the bandpass filter (43*) comprises:
- determining a bandpass filter (43*) having a passband whose minimum frequency, whose maximum frequency and/or whose width is/are derived from the difference spectrum.

3. A method in accordance with claim 1 or claim 2,
wherein the determination of the bandpass filter (43*) comprises:
- transforming the difference spectrum into the time domain; and
- determining a bandpass filter (43*) with respect to a pulse response which corresponds to the transformed difference spectrum.

4. A method in accordance with at least one of the preceding claims,
wherein the determination of the first reference intensity and of the second reference intensity comprises the first reference progression and the second reference progression being filtered by means of the bandpass filter (43*) and a mean value of the filtered first reference progression being used as the mean value of the first reference progression and a mean value of the filtered second reference progression being used as the mean value of the second reference progression.

5. A method in accordance with at least one of the preceding claims,
wherein the method further comprises the following step:
- a higher-level evaluation of the results of the evaluation carried out for each radiation sensor (15) in each case within the framework of the measurement steps.

6. A method in accordance with at least one of the preceding claims,
wherein no positioning beam (27) is transmitted while one of said reference progressions and/or one of said measurement progressions is/are detected.

7. A method in accordance with at least one of the preceding claims,
wherein an optoelectronic sensor unit (11), comprising the radiation sensor (15), for detecting active lighting states of radiation sources (23) does not transmit any radiation (21) while one of said reference progressions and/or one of said measurement progressions is/are detected.

8. A method in accordance with at least one of the preceding claims,
wherein the radiation (21) incident on the radiation sensor (15) previously passed through an optical filter for limiting the spectral range of the radiation, in particular to a spectral range of infrared radiation, and/or a polarization filter.

9. A method in accordance with at least one of the preceding claims,
wherein the radiation (21) incident on the radiation sensor (15) previously passed through a conversion material for modifying the spectral range of the radiation (21), in particular for converting ultraviolet radiation into radiation of a visible spectral range.

10. A method in accordance with at least one of the preceding claims,
wherein the measurement steps are carried out in real time.

11. An optoelectronic sensor unit (11) for detecting active lighting states of radiation sources (23) which comprises at least one radiation sensor (15), in particular at least one photodiode, for detecting temporal progressions of the intensity of radiation (21) incident on the radiation sensor (15) and an evaluation unit (19), in particular having at least one processing unit, and which is configured to carry out a method in accordance with at least one of the preceding claims,
wherein the optoelectronic sensor unit (11) comprises a plurality of radiation sensors (15) which differ from one another with respect to their spectral sensitivity.

12. An optoelectronic sensor unit in accordance with claim 11,
which comprises an arrangement of a plurality of photodiodes, in particular having a corresponding spectral sensitivity, as a radiation sensor (15) and which is configured to be arranged such that radiation (21) transmitted by the respective radiation source (23) is only incident on a subset of the photodiodes, but not on the remaining photodiodes of the arrangement.

13. An optoelectronic sensor unit in accordance with claim 11 or claim 12,
which further comprises an internal radiation source (17), in particular an LED, for transmitting the positioning beam (27).

14. An optoelectronic sensor unit in accordance with at least one of the claims 11 to 13,
which comprises an optical filter for limiting the spectral range of the radiation (21) incident on the radiation sensor (15), in particular to a spectral range of infrared radiation; a polarization filter; and/or a conversion material for modifying the spectral range of the radiation (21) incident on the radiation sensor (15), in particular for converting ultraviolet radiation into radiation of a visible spectral range.

15. An optoelectronic sensor unit in accordance with at least one of the claims 11 to 14,
which further comprises one or more light guides which are each configured to be arranged adjacent to a respective radiation source (23) with one end and to conduct radiation (21) transmitted by the respective radiation source (23) to the radiation sensor (15).

## Revendications

1. Procédé de détection d'états d'éclairage actifs de sources de rayonnement (23), comprenant les étapes d'apprentissage suivantes à effectuer au moins une fois pour un état d'éclairage actif respectif d'une source de rayonnement respective (23) :
- détecter au moyen d'un capteur de rayonnement (15), lorsque la source de rayonnement (23) est mise dans l'état d'éclairage actif, une première évolution temporelle de référence de l'intensité du rayonnement (21) incident sur le capteur de rayonnement (15),
- détecter, au moyen du capteur de rayonnement (15), lorsque la source de rayonnement (23) est mise dans un état d'éclairage inactif, une deuxième évolution temporelle de référence de l'intensité du rayonnement (21) incident sur le capteur de rayonnement (15),
- déterminer un premier spectre de référence en transformant la première évolution de référence dans le domaine des fréquences et déterminer un deuxième spectre de référence en transformant la deuxième évolution de référence dans le domaine des fréquences,
- déterminer un spectre de différence comme différence entre le premier spectre de référence et le deuxième spectre de référence,
- déterminer un filtre passe-bande (43*) basé sur le spectre de différence ;
- déterminer une première intensité de référence comme valeur moyenne de la première évolution de référence et déterminer une deuxième intensité de référence comme valeur moyenne de la deuxième évolution de référence,
- fixer un seuil de commutation (53*) basé sur la première intensité de référence et sur la deuxième intensité de référence ;
ainsi que les étapes de mesure suivantes à effectuer en particulier en continu pour la détection de l'état d'éclairage actif respectif de la source de rayonnement respective (23) :
- détecter, au moyen du capteur de rayonnement (15), une évolution temporelle de mesure de l'intensité du rayonnement (21) incident sur le capteur de rayonnement (15),
- filtrer l'évolution de mesure à l'aide du filtre passe-bande (43*), et
- évaluer l'évolution de mesure filtrée sur la base du seuil de commutation (53*),
en utilisant plusieurs capteurs de rayonnement (15) qui se distinguent par leur sensibilité spectrale,
les étapes d'apprentissage étant effectuées pour chacun des capteurs de rayonnement (15), et le filtre passe-bande (43*) respectif déterminé et le seuil de commutation (53*) respectif fixé étant associés au capteur de rayonnement respectif (15),
les étapes de mesure respectives étant effectuées pour chacun des capteurs de rayonnement (15), et le filtre passe-bande (43*) associé au capteur de rayonnement respectif (15) étant utilisé pour le filtrage, et le seuil de commutation (53*) associé au capteur de rayonnement respectif (15) étant utilisé pour l'évaluation,
le procédé comprenant en outre, avant la mise en oeuvre des étapes d'apprentissage et des étages de mesure, les étapes suivantes consistant à :
- émettre un faisceau de positionnement (27) orienté dans une relation spatiale fixe par rapport au capteur de rayonnement (15), et
- placer le capteur de rayonnement (15) par rapport à la source de rayonnement respective (23) en vue d'une détection fiable d'un état d'éclairage actif respectif de telle sorte que le faisceau de positionnement (27) tombe sur une position prédéterminée par rapport à la source de rayonnement respective (23), en particulier de telle sorte que le faisceau de positionnement (27) tombe sur la source de rayonnement respective (23).

2. Procédé selon la revendication 1,
dans lequel la détermination du filtre passe-bande (43*) consiste à :
- déterminer un filtre passe-bande (43*) avec une bande passante dont la fréquence minimale, la fréquence maximale et/ou la largeur est/sont dérivée(s) du spectre de différence.

3. Procédé selon la revendication 1 ou 2,
dans lequel la détermination du filtre passe-bande (43*) consiste à :
- transformer le spectre de différence dans le domaine temporel, et
- déterminer un filtre passe-bande (43*) à une réponse impulsionnelle correspondant au spectre de différence transformé.

4. Procédé selon l'une au moins des revendications précédentes, dans lequel la détermination de la première intensité de référence et de la deuxième intensité de référence consiste à filtrer la première évolution de référence et la deuxième évolution de référence au moyen du filtre passe-bande (43*) et à utiliser une valeur moyenne de la première évolution de référence filtrée comme valeur moyenne de la première évolution de référence et à utiliser une valeur moyenne de la deuxième évolution de référence filtrée comme valeur moyenne de la deuxième évolution de référence.

5. Procédé selon l'une au moins des revendications précédentes,
le procédé comprenant en outre l'étape suivante consistant à :
- évaluer de niveau supérieur les résultats de l'évaluation effectuée pour chaque capteur de rayonnement respectif (15) dans le cadre des étapes de mesure.

6. Procédé selon l'une au moins des revendications précédentes,
dans lequel aucun rayon de positionnement (27) n'est émis pendant la détection de l'une desdites évolutions de référence et/ou de l'une desdites évolutions de mesure.

7. Procédé selon l'une au moins des revendications précédentes,
dans lequel une unité de capteur optoélectronique (11) comprenant le capteur de rayonnement (15) pour détecter des états d'éclairage actifs de sources de rayonnement (23) n'émet aucun rayonnement (21) pendant la détection de l'une desdites évolutions de référence et/ou de l'une desdites évolutions de mesure.

8. Procédé selon l'une au moins des revendications précédentes,
dans lequel le rayonnement (21) incident sur le capteur de rayonnement (15) passe préalablement à travers un filtre optique destiné à limiter la plage spectrale du rayonnement en particulier à une plage spectrale de rayonnement infrarouge, et/ou à travers un filtre de polarisation.

9. Procédé selon l'une au moins des revendications précédentes,
dans lequel le rayonnement (21) incident sur le capteur de rayonnement (15) passe préalablement à travers un matériau de conversion destiné à modifier la plage spectrale du rayonnement (21), en particulier à convertir le rayonnement ultraviolet en rayonnement d'une plage spectrale visible.

10. Procédé selon l'une au moins des revendications précédentes,
dans lequel les étapes de mesure sont effectuées en temps réel.

11. Unité de capteur optoélectronique (11) pour la détection d'états d'éclairage actifs de sources de rayonnement (23), qui comprend au moins un capteur de rayonnement (15), en particulier au moins une photodiode, pour la détection d'évolutions temporelles de l'intensité du rayonnement (21) incident sur le capteur de rayonnement (15), ainsi qu'une unité d'évaluation (19) ayant en particulier au moins une unité de calcul, et qui est réalisée pour mettre en oeuvre un procédé selon l'une au moins des revendications précédentes,
l'unité de capteur optoélectronique (11) comprenant plusieurs capteurs de rayonnement (15) qui se distinguent par leur sensibilité spectrale.

12. Unité de capteur optoélectronique selon la revendication 11,
qui comprend comme capteur de rayonnement (15) un ensemble de plusieurs photodiodes, en particulier avec une sensibilité spectrale concordante, et qui est réalisée pour être agencée de telle sorte que le rayonnement (21) émis par la source de rayonnement respective (23) ne tombe que sur un sous-ensemble des photodiodes, mais ne tombe pas sur les photodiodes restantes dudit ensemble.

13. Unité de capteur optoélectronique selon la revendication 11 ou 12,
qui comprend en outre une source de rayonnement interne (17), en particulier une DEL, pour émettre le faisceau de positionnement (27).

14. Unité de capteur optoélectronique selon l'une au moins des revendications 11 à 13,
qui comprend un filtre optique destiné à limiter la plage spectrale du rayonnement (21) incident sur le capteur de rayonnement (15) en particulier à une plage spectrale de rayonnement infrarouge, un filtre de polarisation et/ou un matériau de conversion destiné à modifier la plage spectrale du rayonnement (21) incident sur le capteur de rayonnement (15), en particulier à convertir le rayonnement ultraviolet en rayonnement d'une plage spectrale visible.

15. Unité de capteur optoélectronique selon l'une au moins des revendications 11 à 14,
qui comprend en outre un ou plusieurs guides de lumière qui sont chacun réalisés pour être disposés avec une extrémité adjacente à une source de rayonnement respective (23) et pour conduire le rayonnement (21) émis par la source de rayonnement respective (23) vers le capteur de rayonnement (15).
